# EUROPEAN PATENT SPECIFICATION

(11) **EP 3 375 605 B1**
(45) Date of publication and mention of the grant of the patent: **03.05.2023**
(21) Application number: 18159282.5
(22) Date of filing: 28.02.2018
(51) Int. Cl.: B32B 7/02, B32B 27/32, B32B 1/00, B29C 45/16, B29C 45/14, B32B 27/08, B32B 7/022, B29K 21/00, B29K 23/00, B29L 31/30

(54) **METHOD FOR MOLDING A PART, AND CORRESPONDING PART**
VERFAHREN ZUM FORMEN EINES TEILS UND ENTSPRECHENDER TEIL
PROCÉDÉ DE MOULAGE D'UNE PIÈCE ET PIÈCE CORRESPONDANTE

(30) Priority: 17.03.2017 IT 201700029818
(43) Date of publication of application: 19.09.2018
(73) Proprietor: Uniteam Italia S.r.L., 30020 Quarto d'Altino Venezia (IT)
(72) Inventor: ISGRÒ, Carlo, 30020 Quarto d'Altino, Venezia (IT); CARRARO, Piertommaso, I-30020 Quarto d'Altino, Venezia (IT)
(74) Representative: Mitola, Marco

(56) References cited:
- WO-A1-2010/143213
- DE-A1-102005 024 776
- GB-A- 2 426 954

## Description

### FIELD OF APPLICATION

The present invention refers to a method for molding a part, for example for vehicle interiors, typically a dashboard and/or internal panel, and the corresponding molded part, for example for vehicle interiors, made by means of said molding method.

### PRIOR ART

It is well known that vehicle interiors include a plurality of panels which, for example, form part of the dashboard, interior door trim, instrument panel, and so on.

These parts are typically made of a frame or core of plastic material that is covered with leather, imitation leather, or a soft material that is resistant to scratching. It is also known that processes, such as photoengraving, can be performed on the plastic part in order to create a decorative pattern that creates a roughness effect similar to leather.

Solutions involving leather coverings are perceived as being of superior quality by the user, and are soft to the touch and comfortable: however, these solutions are definitely costly.

Solutions consisting of photoengraved or embossed thermoplastic material are definitely more economical than solutions involving leather or imitation leather coverings, but they often suffer from poor resistance to scratching, ultraviolet light, and fatty substances released by users' skin. In addition, these solutions are usually rigid to the touch, since the surface treatments are applied directly to plastic materials: this rigidity is perceived as low quality by users and therefore is not acceptable for vehicles in a certain price range.

It is also known that thin pressed films creating a leather effect on the surface can be used: such films can be colored and are made of materials that withstand abrasion, scratching, and wear, as well as the action of fats from skin with which they may come into contact while the vehicle is being used.

However, the problem remains that such thin films, although resistant, are applied to the underlying plastic base and, as such, the resulting effect is one of extreme rigidity which, as seen earlier, is perceived to be of poor quality.

In order to create greater softness, there are foaming solutions known as "press lamination," but these are very costly and do not ensure good molding repeatability.

However, it is not possible to directly use films with a built-in sponge in the injection process, since the foam tends to be damaged upon contact with the injected plastic material.

Molding methods according to the prior art are disclosed in WO 2010/143213A1, GB 2426954A, and DE 10 2005 024776A1.

### PRESENTATION OF THE INVENTION

Consequently, there is a need to overcome the drawbacks and limitations cited in reference to the prior art.

In particular, there is a need to provide a molding method making it possible to obtain a part for vehicle interiors that is both economical to make, resistant to scratching and chemical agents, and soft to the touch.

This requirement is met by a molding method according to claim 1 and by a part for vehicle interiors according to claim 10.

### DESCRIPTION OF THE DRAWINGS

Further features and benefits of the present invention will be understood more clearly from the following description of its preferred and non-limiting embodiments, in which:

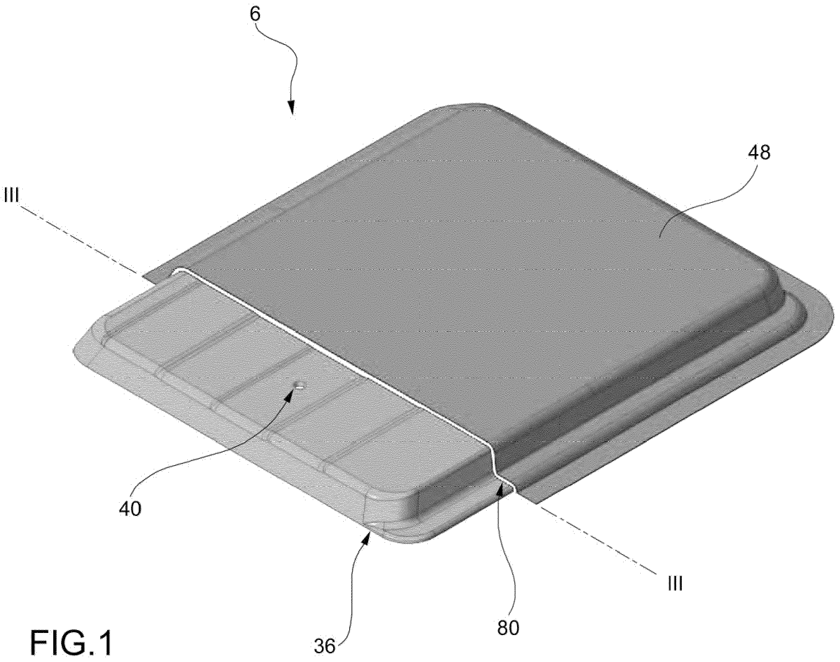

figure 1 shows a schematic perspective view of a molded part for vehicle interiors according to the present invention;

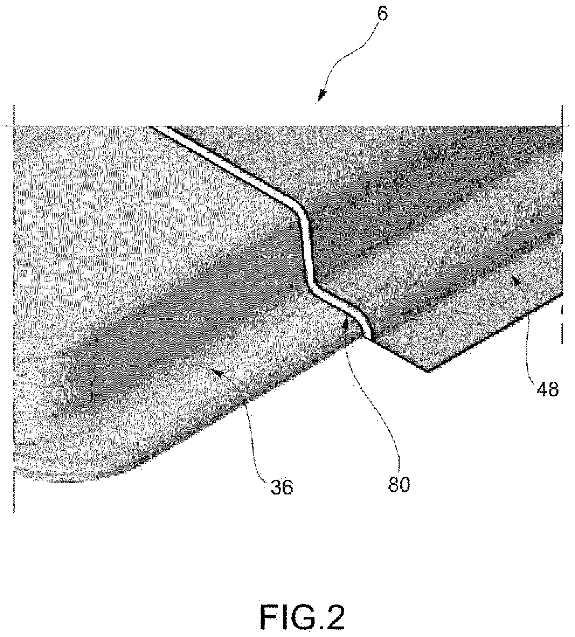

figure 2 shows a view of enlarged part II of figure 1;

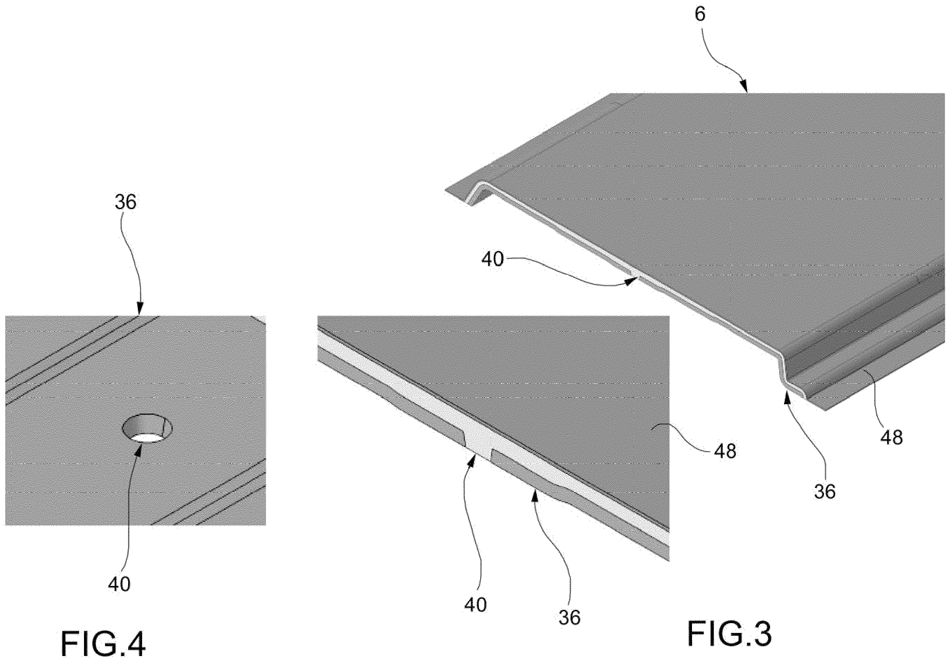

figure 3 shows a cross-sectional view of the part in figure 1, along section plane III of figure 1;
figure 4 shows a view of enlarged part IV of figure 3;

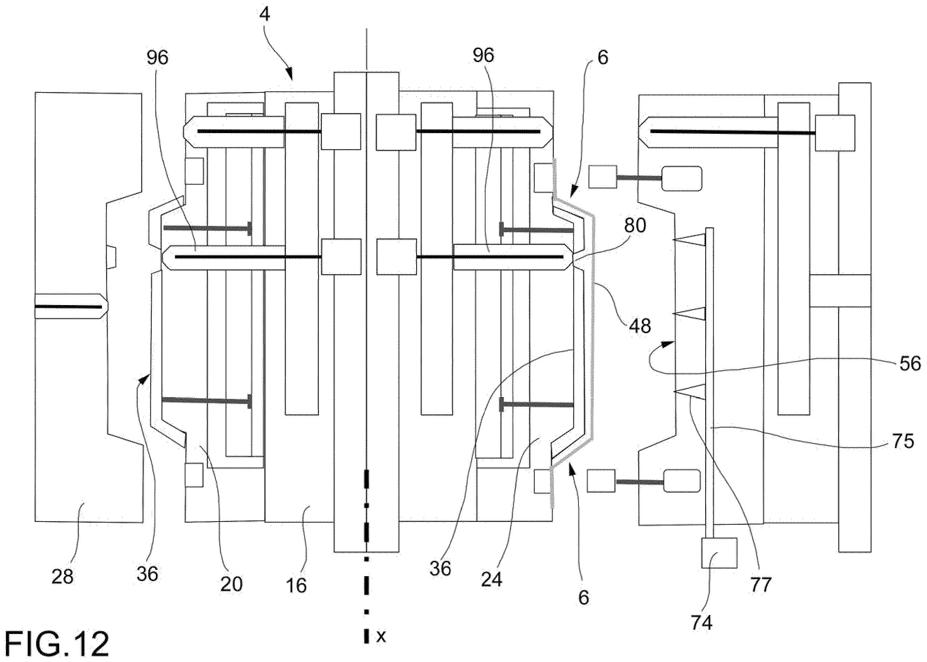

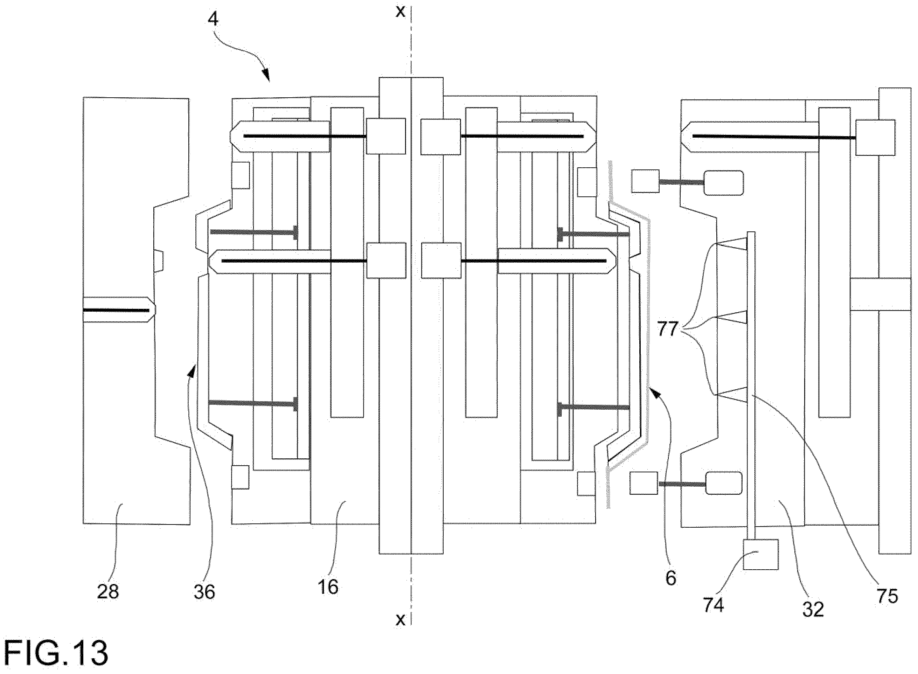

figures 5-13 show cross-sectional views of successive molding steps according to the present invention;

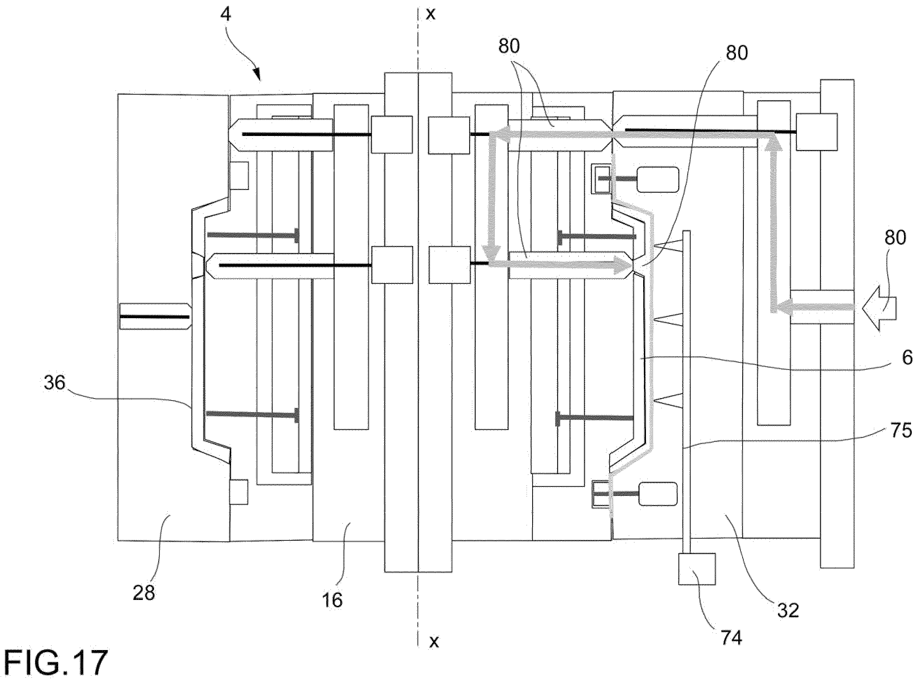

figures 14-22 show schematic views of some details and/or variants of the molding steps in accordance with the present invention, which are described further below.

The elements or parts of elements that are in common between the embodiments described below will be indicated with the same number references.

### DETAILED DESCRIPTION

In reference to the aforementioned figures, the number 4 overall refers to a general schematic view of a mold for component 6 for vehicle interiors, in accordance with the present invention.

Mold 4 is preferably a cube mold comprising at least two injection chambers, i.e. a first injection chamber 8 and a second injection chamber 12.

Mold 4 comprises a central body 16 rotating about an axis of rotation X-X. Central body 16 supports a pair of punches, i.e. first and second punches 20,24 diametrically opposed to each other, alternatively facing first and second injection chambers 8,12, as further described below.

These punches typically are movable in a Y-Y direction of movement or a closing direction of mold 4 substantially perpendicular to the axis of rotation X-X.

Mold 4 also comprises first and second dies 28,32 which pair, respectively, with first and second punches 20,24 so as to define first and second injection chambers 8, 12 .

The molding method for a part 6 for vehicle interiors in accordance with the present invention will now be described.

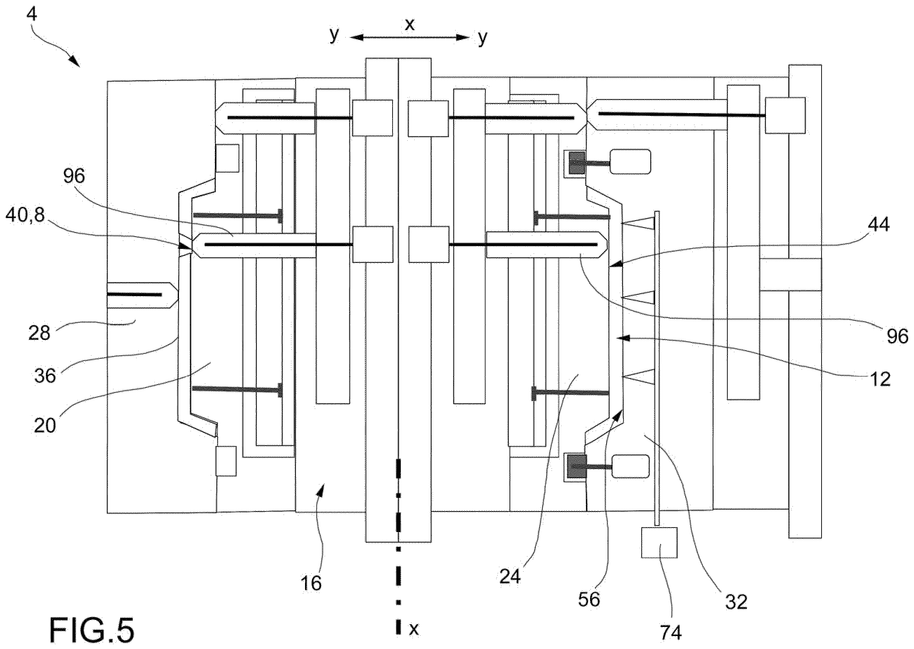

In particular, the method comprises the steps of:
- making mold 4 so as to have first injection chamber 8 shaped to define a negative of base or core 36 of said part 4,
- injecting thermoplastic material, such as polypropylene, into said first injection chamber 8 (figure 5).

Preferably, after injection of base 36, this item will have one or more through holes 40 that will be used in the subsequent injection steps.

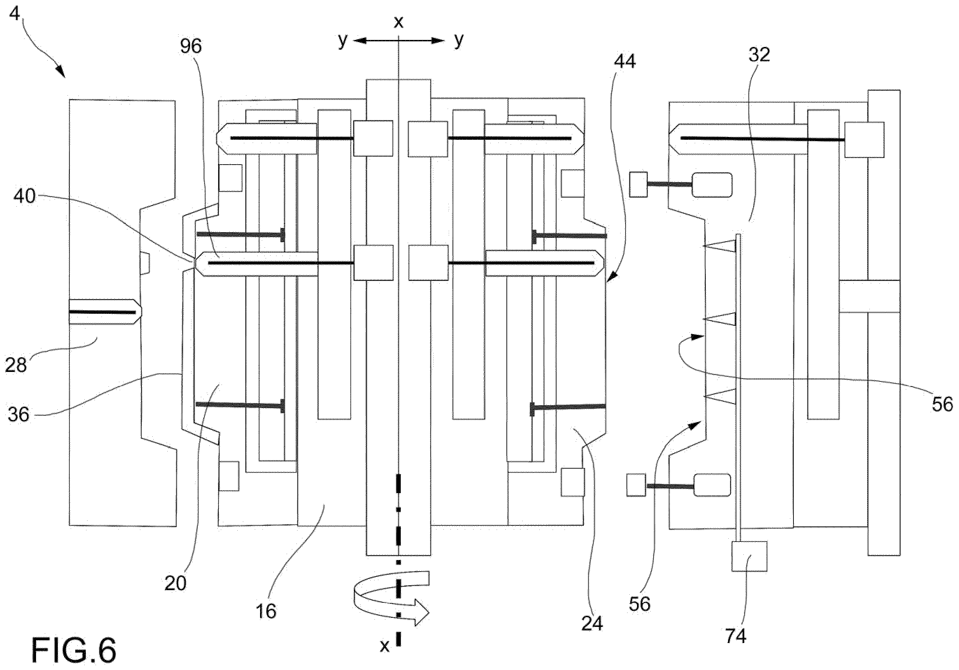

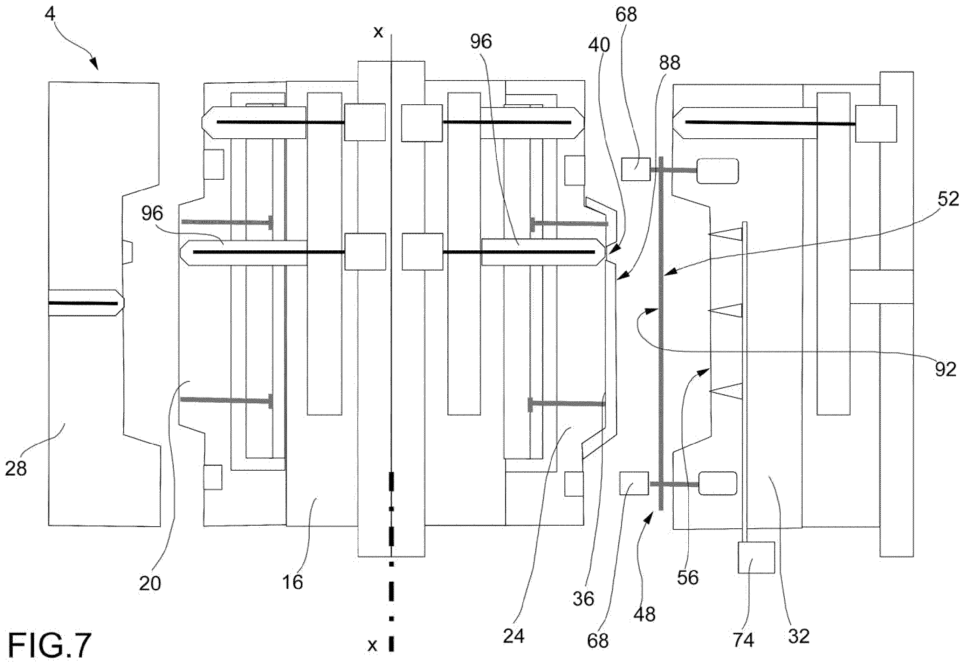

Mold 4 is then opened (figure 6), base 36, just molded, is transferred from first injection chamber 8 and is placed in second injection chamber 12 on the side of functional wall 44 of said second injection chamber 12 (figure 7).

Preferably, the transition of base 4 from first injection chamber 8 to second injection chamber 12 takes place by a 180° rotation of central body 16 of mold 4 about axis of rotation X-X (figure 7).

Next, a lining film 48 is placed in said second injection chamber 12 (figure 7).

Said lining film 48 must be deformed so as to be placed by its external side 52 so as to adhere to an esthetic side 56 of second injection chamber 12, opposite functional wall 44.

External side 52 of lining film 48 is the one intended to be visible from the outside of part 6, as it will cover base 36 of part 4.

It must be noted that the operation of having external side 52 of lining film 48 adhere to esthetic wall 56 of second injection chamber 12 is quite a delicate operation, since imperfect adhesion would cause the part to be discarded.

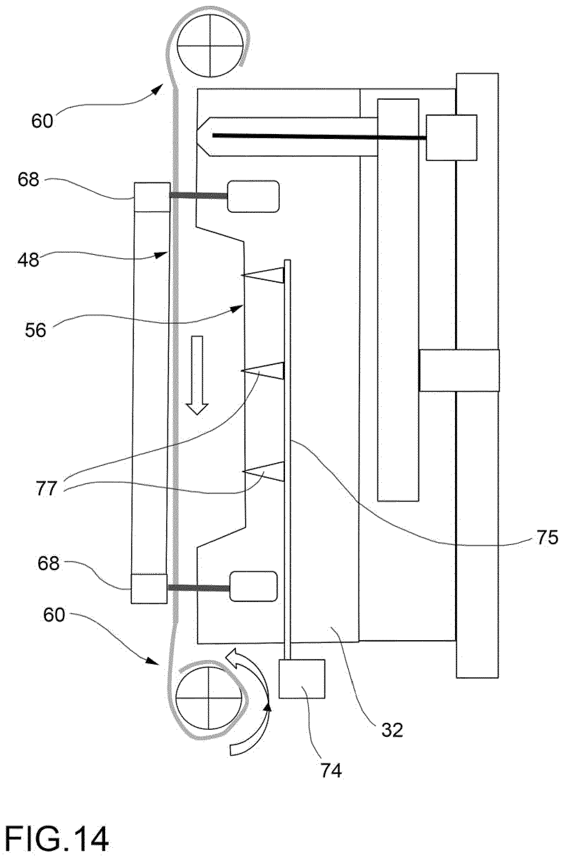

In particular, a step is provided, for example, to feed lining film 48 into second injection chamber 12 through an automatic feed device 60 (figure 14) comprising, for example, a pair of rollers that appropriately stretch and feed lining film 48 into second injection chamber 12.

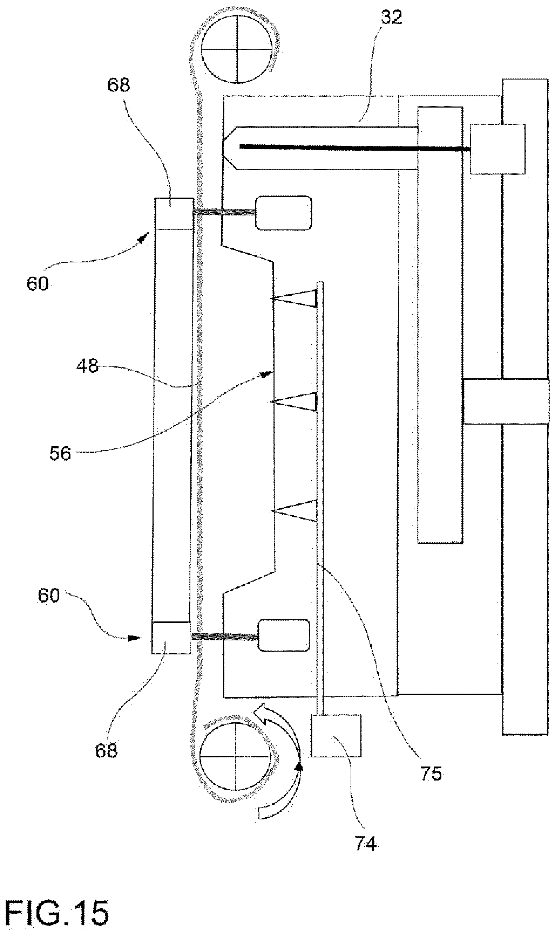

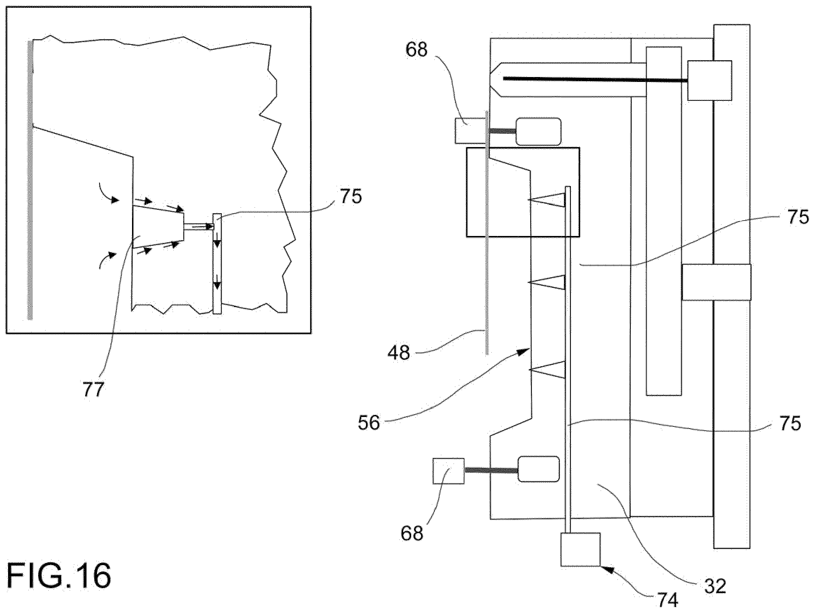

For example (figures 15-16), a locking and sealing device 68 is furthermore provided, making it possible to hold and seal, on the side of esthetic wall 56, a portion of said lining film 48, equal to or greater than base 36, along the periphery thereof against mold 4, so as to exceed second injection chamber 12. In this way a sealed chamber 72 is created between lining film 48 and esthetic wall 56 of second injection chamber 12.

Locking and sealing device 68 is substantially shaped like a closed frame that rests against esthetic wall 56 of second injection chamber 12, peripherally clamping and sealing lining film 48.

At this point the film needs to be deformed, taking care not to stretch it with the punch: indeed, stretching could cause damage and breakage to the film.

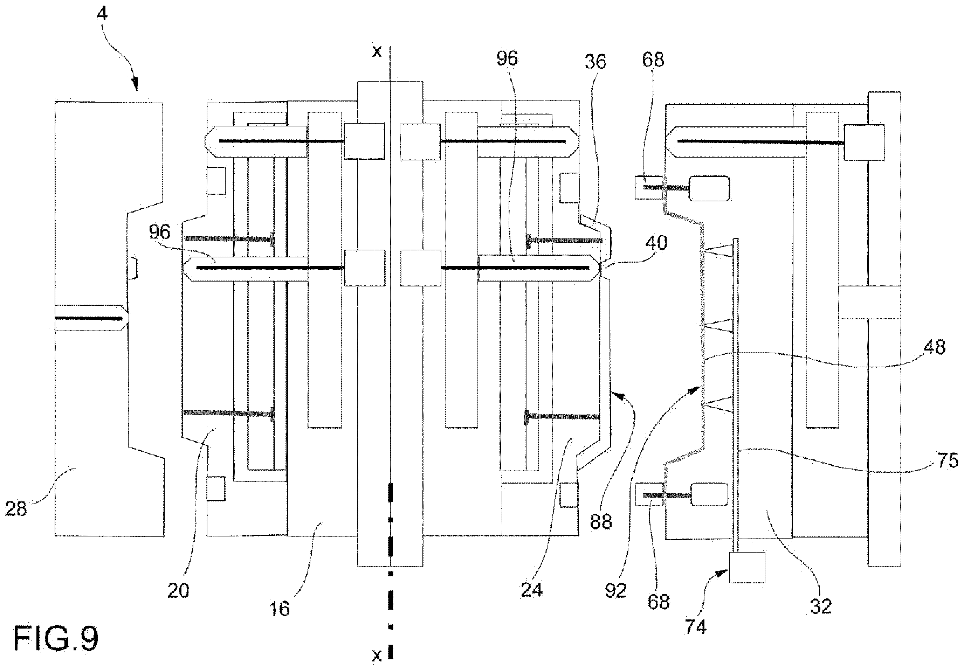

For this reason, according to one embodiment, there is a step for creating a vacuum in sealed chamber 72 so as to promote the deformation and the adhesion of lining film 48 to esthetic wall 56 of second injection chamber 12 (figure 9). The vacuum can be created by connecting sealed chamber 72 to a vacuum pump 74.

Vacuum pump 74 can be connected, for example, to sealed chamber 72 by means of a series of lines 75 that lead to sealed chamber 72 through air passage plugs 77 with openings of sizes such that defects are not created in lining film 48.

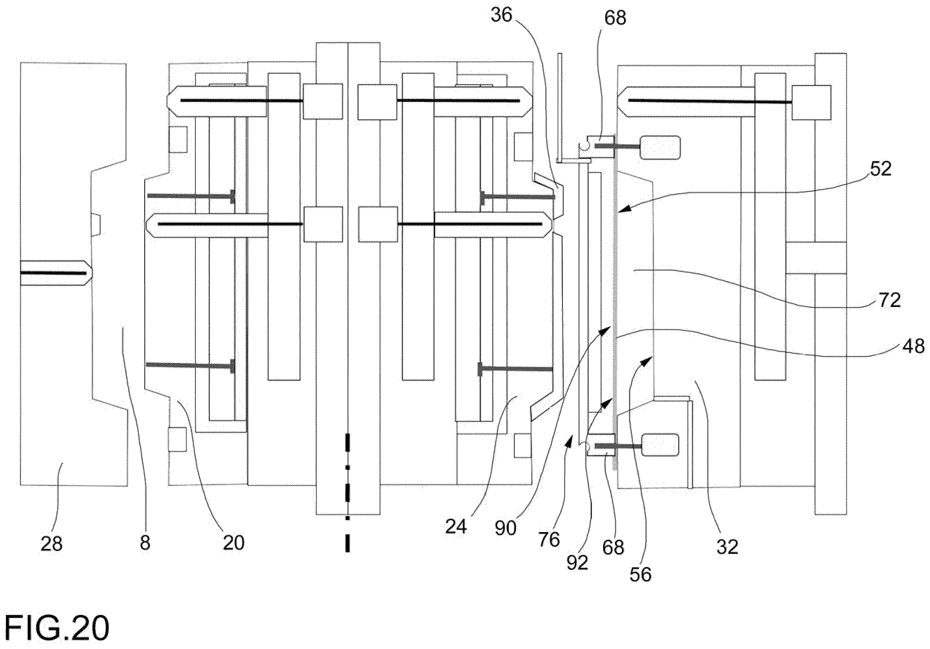

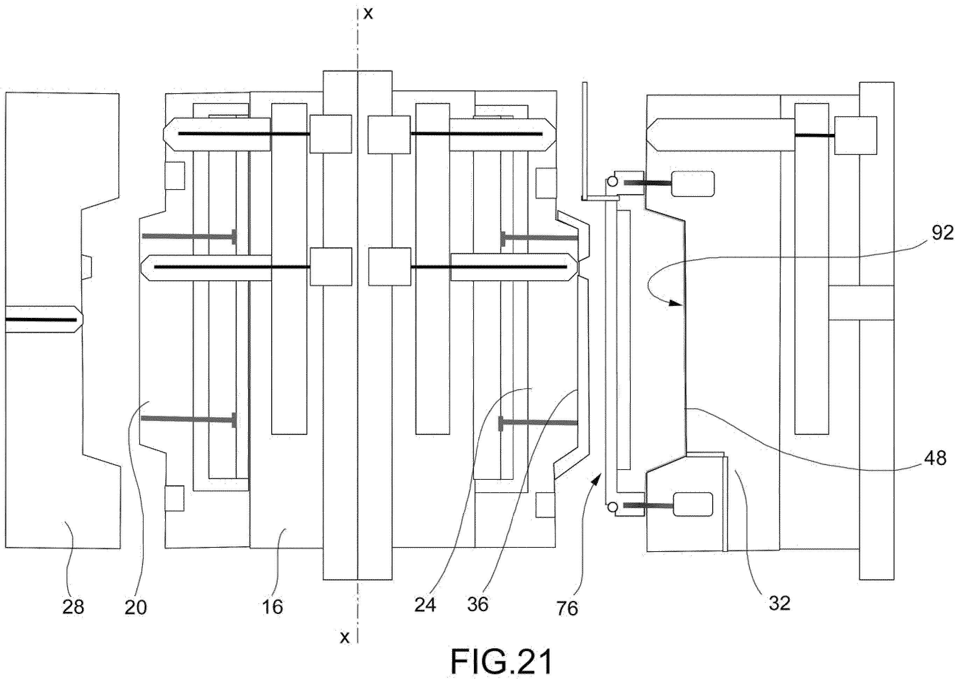

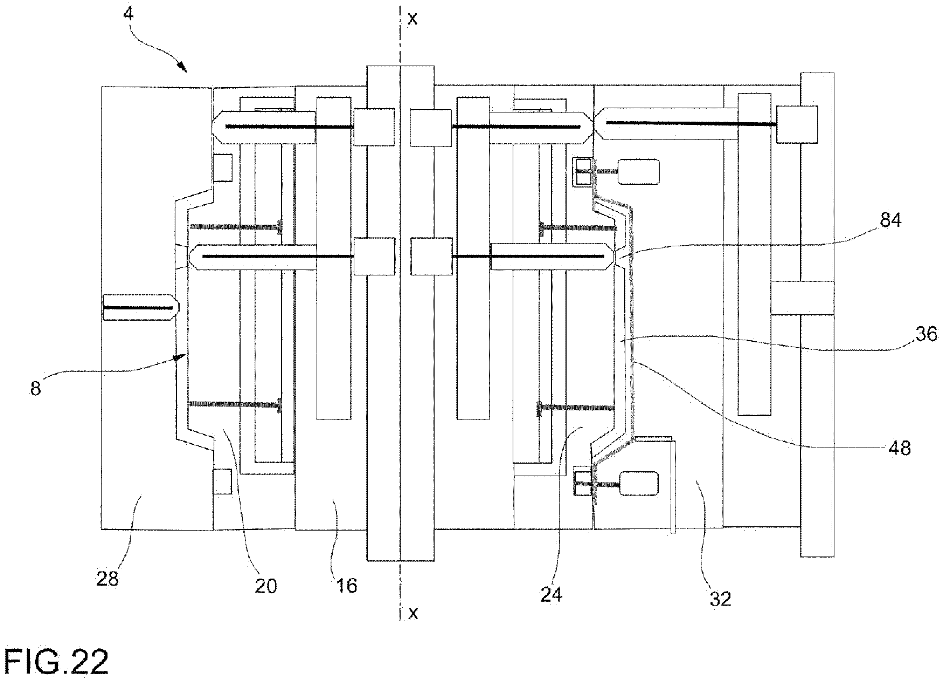

For example, the step for deforming lining film 48 can also be done by means of blowing compressed air into a second sealed chamber 90, once again to promote the deformation and adhesion of lining film 48 to esthetic wall 56 of second injection chamber 12 (figures 20-22).

It is also possible to use a vacuum and compressed air in combination in order to achieve proper deformation of lining film 48.

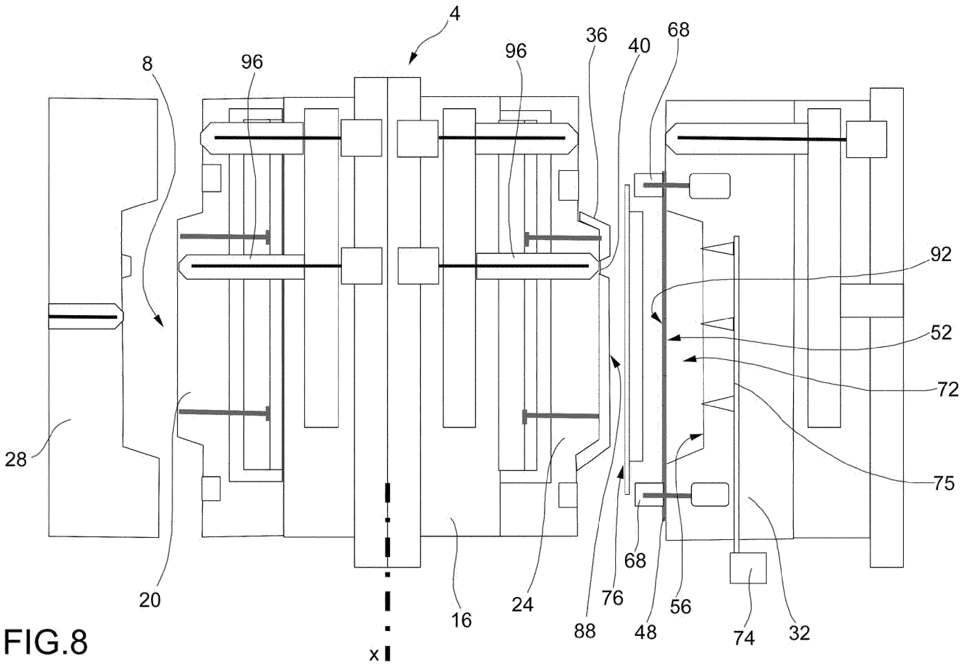

According to one embodiment, there is a step in which locking and sealing device 68 is provided with a heating device 76, such as an infrared heating device, in order to heat lining film 48 during the step for the deformation and adhesion of the film to esthetic wall 56 of second injection chamber 12 (figure 8).

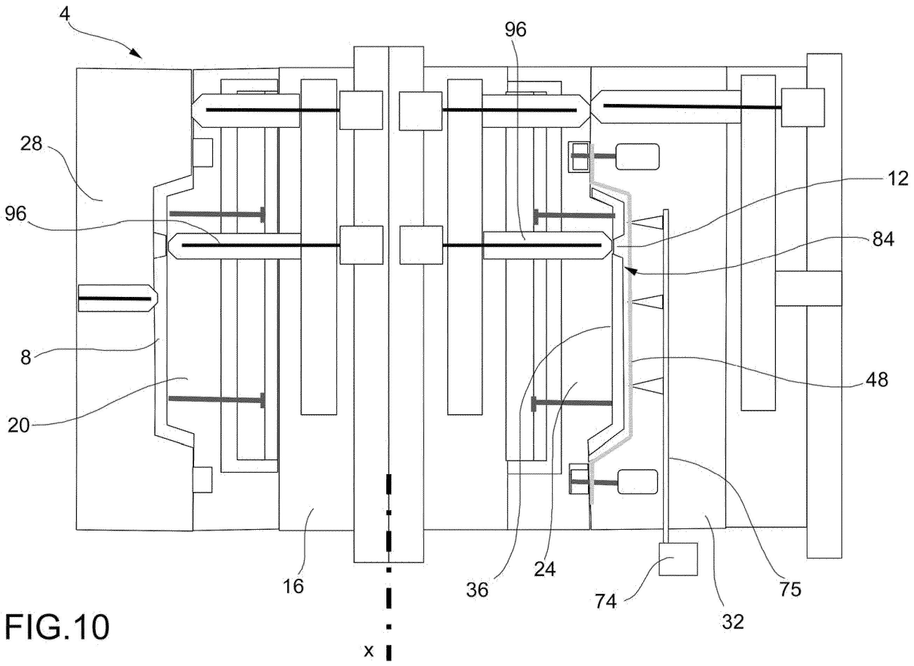

Next, mold 4 is closed, particularly second injection chamber 12 (figure 10), and the step for injecting an intermediate layer 80 of plastic material, such as a thermoplastic elastomer (TPE), is performed.

In particular (figures 10-11), intermediate layer 80 is injected into gap 84 located between an inner wall 88 of base 36 facing lining film 48, and an inner surface 92 of lining film 48 opposite said outer surface 52 so as to create a single-piece sandwich structure, wherein said intermediate layer 80 is present between lining film 48 and base 36.

Intermediate layer 80 advantageously has lower hardness than base 36 and in this way forms a yielding padding for lining film 48.

As mentioned earlier, after the first injection into first injection chamber 8, base 36 comprises at least one through hole 40; said through hole 40 is used as an injection hole for intermediate layer 80 of plastic material into second injection chamber 12 on the side of functional wall 44 of the second injection chamber 12.

It should be noted that, according to one possible embodiment, during the step for injecting thermoplastic material into first injection chamber 8, the step for injecting intermediate material into second injection chamber 12 is also carried out through injectors 96 held by said rotating central body 16.

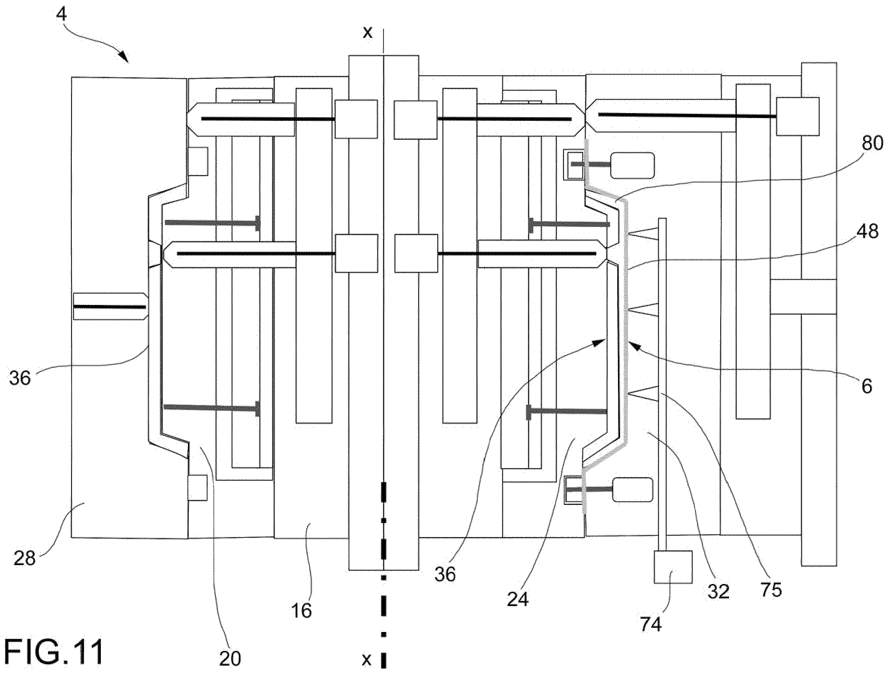

In other words, thanks to the presence of two injection chambers in the same central body 16, it is possible to simultaneously inject both the plastic material of a new base 36 in first injection chamber 12 and intermediate layer 80 on a base 36 previously molded and placed in second injection chamber 12, via through hole 40 (figure 11).

This optimizes the molding step.

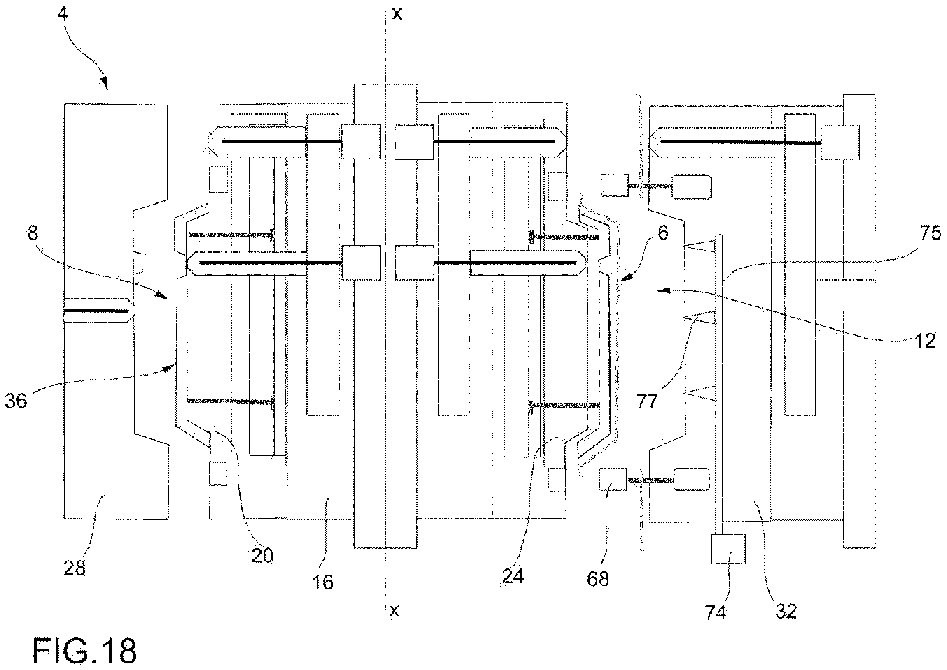

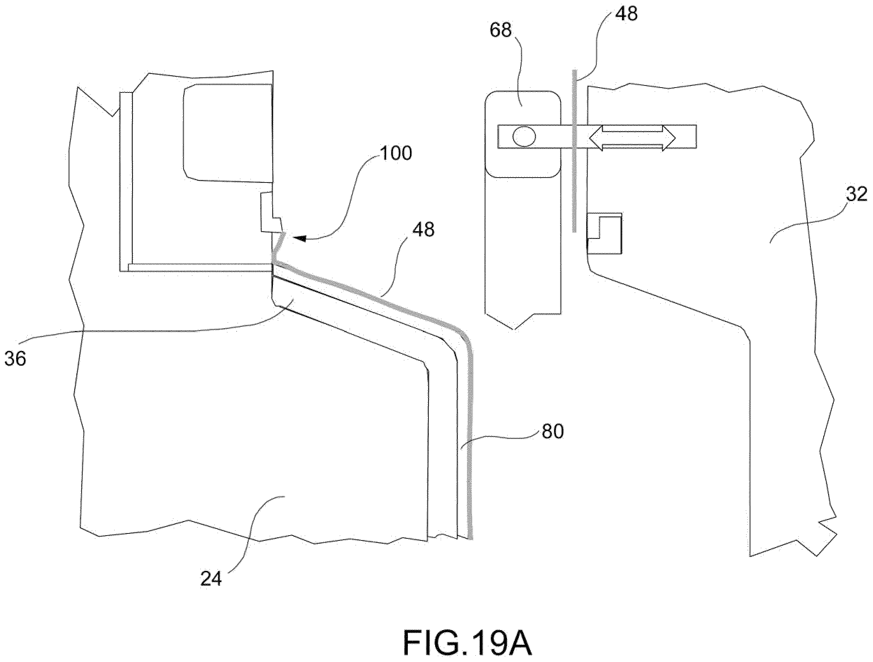

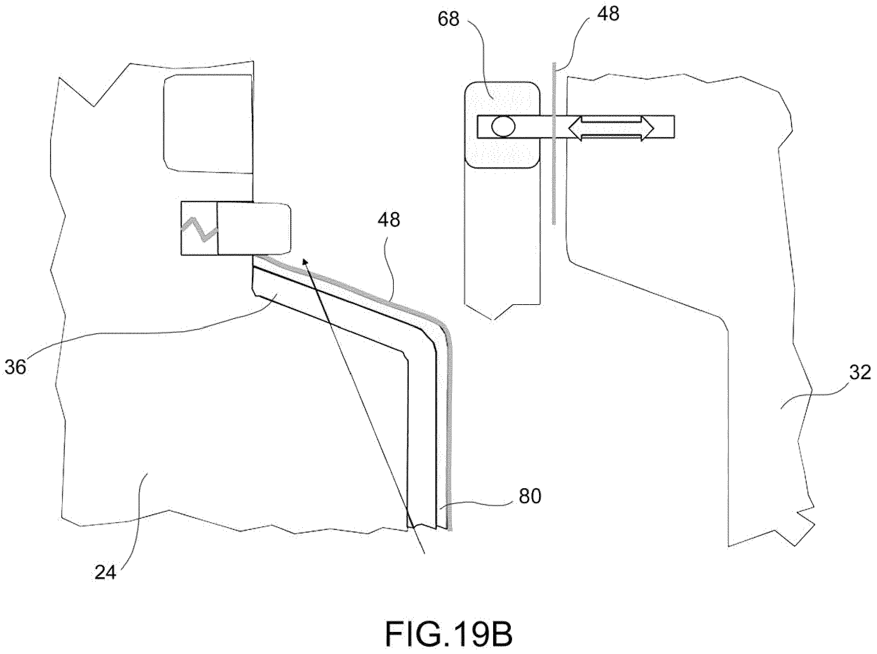

It should be noted that, after injection of intermediate layer 80 of plastic material, there may be a step for cutting the portion of lining film 48 extending beyond second injection chamber 12 by means of at least one cutter 100 built into mold 4 (figures 18-19).

Cutter 100 is preferably a perimeter cutter that cuts along the perimeter adjacent to the outer contour of molded part 6. Thanks to the fact that it is built into mold 4, molded part 6, already free of the scrap from lining film 48, can be extracted.

The part for vehicles, molded according to the method described above, will include a sandwich structure having:
- a base 36 made of thermoplastic material such as polypropylene,
- an intermediate layer 80 made of plastic material, such as a thermoplastic elastomer, applied to base 36,
- a lining film 48 applied to and covering intermediate layer 80 and base 36,
- wherein intermediate layer 80 has lower hardness than base 32 and forms a yielding padding for lining film 48.

As can be seen from the description above, this invention overcomes the drawbacks of the prior art.

In particular, the method of this invention is economical compared to solutions for dashboards lined with real leather, made using the press lamination process.

In addition, this invention is especially resistant to abrasion, scratching, and wear, as well as chemical agents and greases, since the lining film has high mechanical strength and chemical resistance.

In addition, the solution of this invention is pleasing to the touch, since a layer of rubber is placed between the rigid substrate or base made of plastic and the outer lining, making the molded product soft to the touch and therefore similar to a part lined with real leather (but at a significantly higher cost).

Overall, the molding method is reliable, and economical.

The method is also precise, since, thanks to the separate or combined use of a vacuum, compressed air, and/or heating, for example infrared heating, thorough and precise adhesion of the lining film to the mold is achieved without any risk of folds or bubbles.

Adhesion between the lining film and the substrate is assured by the injection of intermediate material serving as a glue between these layers.

The method is also fast and economical thanks to the operation of cutting the excess lining film, preferably inside the actual mold, so that a finished part can be extracted from the second injection chamber.

The lining film also provides the necessary resistance to abrasion and wear thanks to the intermediate layer which, by deforming upon contact with foreign bodies, is capable of absorbing impacts.

In addition, the lining film allows for considerable customization of the graphic effect intended for the part, and furthermore provides noteworthy resistance to the corrosive action of greases and similar substances, which consequently cannot damage the plastic material beneath the film.

In this way the film serves as both a customizable esthetic element and a protective element.

In an effort to meet specific and contingent requirements, an engineer in the field may apply numerous modifications and variants to the molding methods described above, all of which are included in the scope of the invention as defined by the following claims.

## Claims

1. Injection molding method of a part (6) for vehicle interiors, comprising the steps of:
- arranging a mold (4) having a first injection chamber (8) shaped so as to define in negative a base (36) of said part (6),
- injecting thermoplastic material, such as polypropylene, into said first injection chamber (8),
- extracting the base (36) from the first injection chamber (8) and placing it in a second injection chamber (12) on the side of a lower wall (44) of said second injection chamber (12),
- inserting a lining film (48) in said second injection chamber (12) and deforming it so as to arrange it, on the side of an outer surface (52) thereof, adhering to an esthetic wall (56) of the second injection chamber (12) opposite the functional wall (44),
- injecting an intermediate layer (80) of plastic material, such as a thermoplastic elastomer (TPE), in a gap (84) between an inner wall (88) of the base (36) facing the lining film (48), and an inner surface (92) of the lining film (48) opposite said outer surface (52) so as to create a single sandwich structure, wherein said intermediate layer (80) is present between the lining film (48) and the base (36),
- the intermediate layer (80) having lower hardness than the base (36) and forming a yielding padding for the lining film (48);
wherein a step is provided to feed the lining film (48) into the second injection chamber (12) through an automatic feeding device (60) and, through a locking and sealing device (68), peripherally sealing against the mold (4), on the side of the esthetic wall (56), a portion of said lining film (48) equal to or greater than the base (36) so as to exceed the second injection chamber (12), to create a sealed chamber (72) between the lining film (48) and the esthetic wall (56) of the second injection chamber (12); and
wherein a step is provided to associate the locking and sealing device (68) with a heating device (76) so as to heat the lining film (48) during the step of deformation and adhesion of same to the esthetic wall (56) of the second injection chamber (12).

2. An injection molding method (4) according to claim 1, wherein following the first injection in the first injection chamber (8), the base (36) comprises at least one through hole (40), said through hole (40) being used as an injection hole for the intermediate layer (80) of plastic material into the second injection chamber (12), on the side of the functional wall (44) of the second injection chamber (12).

3. An injection molding method (4) according to any one of the preceding claims, wherein a step is provided to create a vacuum inside the sealed chamber (72) so as to promote the deformation and the adhesion of the lining film (48) to the esthetic wall (56) of the second injection chamber (12).

4. An injection molding method (4) according to any one of the preceding claims, wherein a step is provided to blow compressed air into a second sealed chamber (90) so as to promote the deformation and the adhesion of the lining film (48) to the esthetic wall (56) of the second injection chamber (12).

5. An injection molding method (8) according to any one of the preceding claims, wherein following the injection of the intermediate layer (80) of plastic material, a step is provided to cut the portion of lining film (48) extending beyond the second injection chamber (12) by means of at least one cutter (100) built into the mold (4) .

6. An injection molding method (8) according to any one of the preceding claims, wherein a step is provided to provide a cube-shaped mold (4) having a central body (16) rotating about an axis of rotation (X-X), said central body (16) supporting a pair of punches (20, 24) diametrically opposed to each other, alternately facing the first and the second injection chamber (8, 12).

7. An injection molding method according to claim 6, wherein, during the step of thermoplastic material injection in the first injection chamber (8), the step for injecting the intermediate layer (80) in the second injection chamber (12) is also carried out through injectors (96) supported by said rotating central body (16) .

## Patentansprüche

1. Spritzgießverfahren eines Teils (6) für ein Fahrzeuginnenräume, umfassend die Schritte:
- Anordnen einer Form (4), die eine erste Einspritzkammer (8) aufweist, die so geformt ist, dass sie im Negativen eine Basis (36) des Teils (6) definiert,
- Einspritzen von thermoplastischem Material, wie Polypropylen, in die erste Einspritzkammer (8),
- Entnehmen der Basis (36) aus der ersten Einspritzkammer (8) und Platzieren derselben in einer zweiten Einspritzkammer (12) auf der Seite einer unteren Wand (44) der zweiten Einspritzkammer (12),
- Einsetzen eines Auskleidungsfilms (48) in die zweite Einspritzkammer (12) und verformen desselben so, um ihn auf der Seite einer Außenfläche bzw. - oberfläche (52) davon haftend an einer ästhetischen Wand (56) der zweiten Einspritzkammer (12) gegenüber bzw. entgegengesetzt der Funktionswand (44) anzuordnen,
- Einspritzen einer Zwischenschicht (80) aus Kunststoffmaterial, wie einem thermoplastischen Elastomer (TPE), in einen Spalt (84) zwischen einer dem Auskleidungsfilm (48) zugewandten Innenwand (88) der Basis (36) und einer Innenfläche bzw. -oberfläche (92) des Auskleidungsfilms (48) gegenüber bzw. entgegengesetzt der Außenfläche (52), um eine einzige bzw. einzelne Sandwichstruktur zu erzeugen, wobei die Zwischenschicht (80) zwischen dem Auskleidungsfilm (48) und der Basis (36) vorhanden ist,
- die Zwischenschicht (80) eine geringere Härte als die Basis (36) aufweist und eine rückstellfähige Polsterung für den Auskleidungsfilm (48) bildet;
wobei ein Schritt vorgesehen ist, um den Auskleidungsfilm (48) in die zweite Einspritzkammer (12) durch eine automatische Zuführvorrichtung (60) zuzuführen, und durch eine Verriegelungs- und Abdichtvorrichtung (68) einen Abschnitt des Auskleidungsfilms (48) gleich oder größer als die Basis (36) umfänglich gegen die Form (4) abzudichten, so dass er die zweite Einspritzkammer (12) überragt, und zwar auf der Seite der ästhetischen Wand (56), um eine abgedichtete Kammer (72) zwischen dem Auskleidungsfilm (48) und der ästhetischen Wand (56) der zweiten Einspritzkammer (12) zu bilden; und
wobei ein Schritt vorgesehen ist, um die Verriegelungs- und Abdichtvorrichtung (68) mit einer Heizvorrichtung (76) zu verbinden, um den Auskleidungsfilm (48) während des Schrittes des Verformens und Anhaftens desselben an der ästhetischen Wand (56) der zweiten Einspritzkammer (12) zu erwärmen.

2. Spritzgießverfahren (4) nach Anspruch 1, wobei nach dem ersten Einspritzen in die erste Einspritzkammer (8) die Basis (36) zumindest ein Durchgangsloch (40) umfasst, wobei das Durchgangsloch (40) als ein Einspritzloch für die Zwischenschicht (80) aus Kunststoffmaterial in die zweite Einspritzkammer (12) verwendet wird, und zwar auf der Seite der Funktionswand (44) der zweiten Einspritzkammer (12).

3. Spritzgießverfahren (4) nach einem der vorhergehenden Ansprüche, wobei ein Schritt vorgesehen ist, um ein Vakuum innerhalb der abgedichteten Kammer (72) zu erzeugen, um die Verformung und das Anhaften des Auskleidungsfilms (48) an der ästhetischen Wand (56) der zweiten Einspritzkammer (12) zu fördern.

4. Spritzgießverfahren (4) nach einem der vorhergehenden Ansprüche, wobei ein Schritt vorgesehen ist, um Druckluft in eine zweite abgedichtete Kammer (90) zu blasen, um die Verformung und das Anhaften des Auskleidungsfilms (48) an der ästhetischen Wand (56) der zweiten Einspritzkammer (12) zu fördern.

5. Spritzgießverfahren (8) nach einem der vorhergehenden Ansprüche, wobei nach dem Einspritzen der Zwischenschicht (80) aus Kunststoffmaterial ein Schritt vorgesehen ist, um den Abschnitt des Auskleidungsfilms (48), der sich über die zweite Einspritzkammer (12) hinaus erstreckt, mittels zumindest einer Schneidvorrichtung (100) abzuschneiden, die in die Form (4) eingebaut ist.

6. Spritzgießverfahren (8) nach einem der vorhergehenden Ansprüche, wobei ein Schritt vorgesehen ist, um eine würfelförmige Form (4) bereitzustellen, die einen zentralen Körper (16) aufweist, der sich um eine Rotationsachse (X-X) dreht, wobei der zentrale Körper (16) ein Paar Stempel (20, 24) stützt bzw. trägt, die einander diametral gegenüberliegen bzw. entgegengesetzt sind, und zwar abwechselnd der ersten und der zweiten Einspritzkammer (8, 12) zugewandt.

7. Spritzgießverfahren nach Anspruch 6, wobei während des Schritts des Einspritzens von thermoplastischem Material in die erste Einspritzkammer (8) auch der Schritt des Einspritzens der Zwischenschicht (80) in die zweite Einspritzkammer (12) durchgeführt wird durch Injektoren (96), die von dem rotierenden zentralen Körper (16) getragen werden, heraus.

## Revendications

1. Procédé de moulage par injection d'une pièce (6) pour des intérieurs de véhicule, comprenant les étapes suivantes :
- l'agencement d'un moule (4) comportant une première chambre d'injection (8) façonnée de manière à définir, en négatif, une base (36) de ladite pièce (6),
- l'injection d'un matériau thermoplastique, comme du polypropylène, dans ladite première chambre d'injection (8),
- l'extraction de la base (36) de la première chambre d'injection (8) et le placement de celle-ci dans une seconde chambre d'injection (12) sur le côté d'une paroi inférieure (44) de ladite seconde chambre d'injection (12),
- l'insertion d'un film de revêtement (48) dans ladite seconde chambre d'injection (12) et la déformation de celui-ci de manière à l'agencer, sur le côté d'une surface extérieure (52) de celui-ci, en adhérence à une paroi esthétique (56) de la seconde chambre d'injection (12) à l'opposé de la paroi fonctionnelle (44),
- l'injection d'une couche intermédiaire (80) d'un matériau plastique, comme un élastomère thermoplastique (TPE), dans un espacement (84) entre une paroi intérieure (88) de la base (36) faisant face au film de revêtement (48), et une surface intérieure (92) du film de revêtement (48) à l'opposé de ladite surface extérieure (52) de manière à créer une structure en sandwich unique, ladite couche intermédiaire (80) étant présente entre le film de revêtement (48) et la base (36),
- la couche intermédiaire (80) présentant une dureté inférieure à celle de la base (36) et formant un rembourrage souple pour le film de revêtement (48) ;
étant prévue une étape pour approvisionner le film de revêtement (48) dans la seconde chambre d'injection (12) par l'intermédiaire d'un dispositif d'approvisionnement automatique (60) et, par l'intermédiaire d'un dispositif de verrouillage et de scellement (68), sceller de manière périphérique contre le moule (4), sur le côté de la paroi esthétique (56), une partie dudit film de revêtement (48) supérieure ou égale à la base (36) de manière à dépasser la seconde chambre d'injection (12), pour créer une chambre scellée (72) entre le film de revêtement (48) et la paroi esthétique (56) de la seconde chambre d'injection (12) ; et
étant prévue une étape pour associer le dispositif de verrouillage et de scellement (68) à un dispositif de chauffage (76) de manière à chauffer le film de revêtement (48) au cours de l'étape de déformation et d'adhérence de celui-ci à la paroi esthétique (56) de la seconde chambre d'injection (12).

2. Procédé de moulage par injection (4) selon la revendication 1, la base (36) comprenant, à la suite de la première injection dans la première chambre d'injection (8), au moins un trou traversant (40), ledit trou traversant (40) étant utilisé en tant que trou d'injection pour la couche intermédiaire (80) d'un matériau plastique dans la seconde chambre d'injection (12), sur le côté de la paroi fonctionnelle (44) de la seconde chambre d'injection (12).

3. Procédé de moulage par injection (4) selon l'une quelconque des revendications précédentes, étant prévue une étape pour créer un vide à l'intérieur de la chambre scellée (72) de manière à promouvoir la déformation et l'adhérence du film de revêtement (48) à la paroi esthétique (56) de la seconde chambre d'injection (12).

4. Procédé de moulage par injection (4) selon l'une quelconque des revendications précédentes, étant prévue une étape pour souffler de l'air comprimé dans une seconde chambre scellée (90) de manière à promouvoir la déformation et l'adhérence du film de revêtement (48) à la paroi esthétique (56) de la seconde chambre d'injection (12).

5. Procédé de moulage par injection (8) selon l'une quelconque des revendications précédentes, étant prévue, à la suite de l'injection de la couche intermédiaire (80) de matériau plastique, une étape pour découper la partie de film de revêtement (48) s'étendant au-delà de la seconde chambre d'injection (12) au moyen d'au moins un découpeur (100) intégré au moule (4).

6. Procédé de moulage par injection (8) selon l'une quelconque des revendications précédentes, étant prévue une étape pour fournir un moule de forme cubique (4) comportant un corps central (16) tournant autour d'un axe de rotation (X-X), ledit corps central (16) supportant une paire de poinçons (20, 24) à l'opposé diamétralement l'un de l'autre, faisant face en alternance aux première et seconde chambres d'injection (8, 12).

7. Procédé de moulage par injection selon la revendication 6, au cours de l'étape d'injection de matériau thermoplastique dans la première chambre d'injection (8), l'étape pour injecter la couche intermédiaire (80) dans la seconde chambre d'injection (12) étant également réalisée par l'intermédiaire d'injecteurs (96) supportés par ledit corps central (16) rotatif.
